# EUROPEAN PATENT APPLICATION

(11) **EP 1 107 539 A2**
(43) Date of publication of application: **13.06.2001**
(21) Application number: 00310697.8
(22) Date of filing: 01.12.2000
(51) Int. Cl.: H04L 29/06

(54) **Apparatus for supplying content to a portable terminal**

(30) Priority: 01.12.1999 JP 34205399
(71) Applicant: NEC CORPORATION, Tokyo (JP)
(72) Inventor: Shimura, Satoshi, Minato-ku, Tokyo (JP); Saida, Yoshinori, Minato-ku, Tokyo (JP)
(74) Representative: Orchard, Oliver John

(57) **Abstract**

Between a portable terminal 2 and a content server there is interposed a divided content supply section, in order to obtain the content demanded by the portable terminal from the content server and transmit it to the portable terminal to avoid useless content prefetching at a gateway server. The divided content supply section 14 transmits the content demanded by the portable terminal 2 to obtain by divided content unit each amount of information that can be displayed by the portable terminal 2. A prefetching section 17 prefetches the other contents referred to from the divided content, by a divided content unit transmitted to the portable terminal 2 from a, or a group of content servers 3 and stores it in a content hold section 11.

## Description

This invention relates to a content supply apparatus, and to a machine readable recording medium. A particular content supply apparatus to be described below, by way of example in illustration of the invention, is interposed in one arrangement between a portable terminal and a content server, for obtaining content demanded by the portable terminal and to obtain and send content to the portable terminal. By "content" is meant the information or data content of an apparatus.

In general, a portable terminal having a radio communication function, obtains HTML files, image files, sound files or other contents on a content server according to the procedures to be described below, as examples.

First, in one arrangement a portable terminal transmits a content acquisition demand specifying the URI (Universal Resource Identifier) to a gateway server by radio communication. The gateway server obtains the specified content from a content server specified in the URI. Here, the gateway server and the content server are network connected by the internet, or the like. The gateway server that has obtained the content, transmits the content to the portable terminal. Upon the receipt of the content, the portable terminal displays this particular content using an information display on the portable terminal. The content sometimes includes a plurality of URI format link information to the other contents, and if the user operation selects one of them, the selected content is obtained again.

Here, both the communication from the portable terminal to the gateway server and the communication from the gateway server to the content server are poor in the amount or quality of the communication; therefore, most of time required for the content acquisition is occupied by the transmission time of the content from the content server to the gateway server, and the transmission time of the content by radio communication from the gateway server to the terminal.

On the other hand, as for a general client terminal which is not a portable terminal, as a technique or technology for reducing the time taken from the content acquisition demand emitted by the user to the actual display of that content on the client terminal, it has been proposed to prefetch previously the contents that can be asked for by the client to be obtained. This technology or technique is classified roughly into a first method for storing in the portable terminal and a second method for storing in the gateway server (or proxy server).

As an example of the prefetch technology of the first method, it was proposed in Japan Patent Publication HEI 6-110926 to investigate link information in the content actually displayed on a portable terminal, and for the portable terminal to prefetch the content on the content server contained in the link information, before the link is specified by the user, and held in the portable terminal. When a succeeding or next content is demanded to be obtained by the user operation, a rapid response is realized by displaying the demanded content, if it exists in a group of prefetched contents in the terminal. On the other hand, it was proposed in Japan Patent Publication HEI 0-87526 to reduce the necessary memory on the terminal side compared to prefetching the whole contents, by giving a priority order based on the user operation history, or the like, on the client terminal side or the server side, when the terminal prefetches the content, and prefetching only those contents of high priority and holding them on the terminal side.

As an example of the prefetch technology of the second method, it was proposed in Japan Patent Publication HEI 11-149405 to prefetch the content referred to by the content asked for by the terminal and to obtain and cache it in the server side. Moreover, a technique is possible for reducing the content to be prefetched by giving priority to each cached content, according to its request frequency, and basing the prefetching on the priority of the content asked for by the user to obtain it according to its importance to that user. For instance, if the priority of the content asked for by the user to be obtained is defined as "high", the whole contents referred to by this content are prefetched or reloaded, and if the priority is defined as "middle", only the already cached content among the contents referred to by this content is reloaded, and if the priority is defined as "low", only the content already cached and having a "high" priority among the contents referred to by this content is reloaded. Here, "reload" means the process of replacing an already cached content with the newest original content on the content server, and "prefetch" means the process of obtaining non-cached content from the content server and caching the same.

An inconvenience of the prior proposals is that, for a portable terminal, it takes a long time from the content acquisition operation by the user to the actual display of the content, compared to a large capacity personal computer, such as an ordinary lap-top terminal, or the like. This is because the radio communication speed is generally slower than the wire communication speed, and the transfer itself of the contents takes much time. Moreover, in the case of a portable terminal, the screen size, memory capacity or other factors limit the amount of information that can be displayed at one time, and the gate server cannot send the content demanded by the portable terminal to obtain it as it is, but it should send it by dividing it into a unit amount of information that can be displayed, and this supplementary division processing can also take as much time.

Another inconvenience of the prior proposals is that there is no content prefetching technology effective for reducing the time between the content acquisition operation by the portable terminal user and the actual display of the content. This is because, among the content prefetching technologies previously proposed, the first method for holding the prefetched content on the terminal is limited by the memory capacity if applied to the portable terminal, and since little capacity can be used to hold the content, it can hardly be applied. As for the second method in which the prefetched content is stored at the gateway server, if applied as previously proposed, useless prefetched content increases, and therefore, the traffic load increases. This is because, as the previously proposed prefetching technology includes the prefetching by a content unit asked for by the user to be obtained, the contents referred to by the divided portion demanded to be obtained, but which includes useless content, thus prefetching contents not transmitted yet to the portable terminal are also prefetched.

Features of arrangements to be described below, by way of example in illustration of the present invention are that the time between the content acquisition operation by the portable terminal user and the actual transmission to the portable terminal and display of the content, is reduced and that useless content prefetching is avoided.

The following description and drawings disclose, by means of examples, the invention which is defined in the appended claims, whose terms determine the extent of the protection conferred hereby.

In the drawings:-
Fig. 1 is a block schematic circuit diagram of a content supply apparatus,
Fig. 2 is a flow chart for use in describing the operation of a gateway server,
Fig. 3 is a flow chart for use in describing the operation of a gateway server,
Fig. 4 is a flow chart for use in describing the operation of a gateway server,
Fig. 5 is a flow chart for use in describing the operation of a gateway server,
Fig. 6 is a schematic diagram illustrating the status of a transmission memory section and a prefetching memory section,
Fig. 7 is a block schematic circuit diagram of a content supply apparatus,
Fig. 8 is a flow chart for use in describing the operation of another gateway server,
Fig. 9 is a flow chart for use in describing the operation of a gateway server,
Fig. 10 is a flow chart for use in describing the operation of a gateway server,
Fig. 11 is a flow chart for use in describing the operation of a prefetching list creation section of a portable terminal,
Fig. 12 is a flow chart for use in describing the operation of a gateway server,
Fig. 13 is a flow chart for use in describing the operation of a gateway server,
Fig. 14 is a flow chart for use in describing the operation of a gateway server, and
Fig. 15 is a schematic diagram for use in describing a content supply apparatus of the another arrangement illustrative of the invention.

The present invention will be described, by way of example, with reference to a content supply apparatus such as gateway server or proxy server, interposed between a portable terminal and a content server, for obtaining the content demanded by the portable terminal and to obtain and send it to the portable terminal, the apparatus including a content hold means for holding the content obtained from the content server, a divided content supply means for obtaining the content demanded by the portable terminal from the content hold means if the same exists in the said means, and from the content server if the same does not exist in the content hold means, and transmitting the content to the portable terminal by divided content unit of every amount of information that can be displayed by the portable terminal, and a prefetcher means for prefetching the other contents referred from the divided content, by transmitting the divided content unit, from the content server, and storing it in the content hold means. Thus, by means of the divided content unit, which is transmitted to the portable terminal, carrying out other content prefetching which is referred from the divided content, the present invention avoids useless content prefetching and reduces the time for the actual transmission of the content to the portable terminal display.

Moreover, apparatus to be described in illustration of the present invention includes a link information format conversion section for the mutual conversion of URI formal link information and ID number format link information, and the divided content supply means transmits link information in the divided content to be transmitted to the portable terminal by substituting entirely with the ID number format in the link information format conversion section, obtaining the corresponding URI by the link information format conversion section, when the portable terminal demands the content to be obtained in the ID number format. This allows the amount of information to be transferred to be reduced compared to the exchange of URI format link information between the portable terminal and the content supply apparatus, and thereby reduces the communication time and economizes in the communication cost.

Further, in the arrangements to be described, as examples, in illustration of the present invention, if the content to prefetch is either the content under pay content access restriction, or the content that could not be prefetched due to network trouble, or some other reason, the prefetcher means stores that message in the content hold means, matching off against the content URI concerned, and the content division means, upon the receipt of the message during the search of the content demanded by the portable terminal to obtain the content from the content hold means, transmits the message to the portable terminal. This allows the portable terminal user to know beforehand whether the content in trouble, is the pay content, or the access limited content, and to dispense with useless access and useless payment of a communication fee.

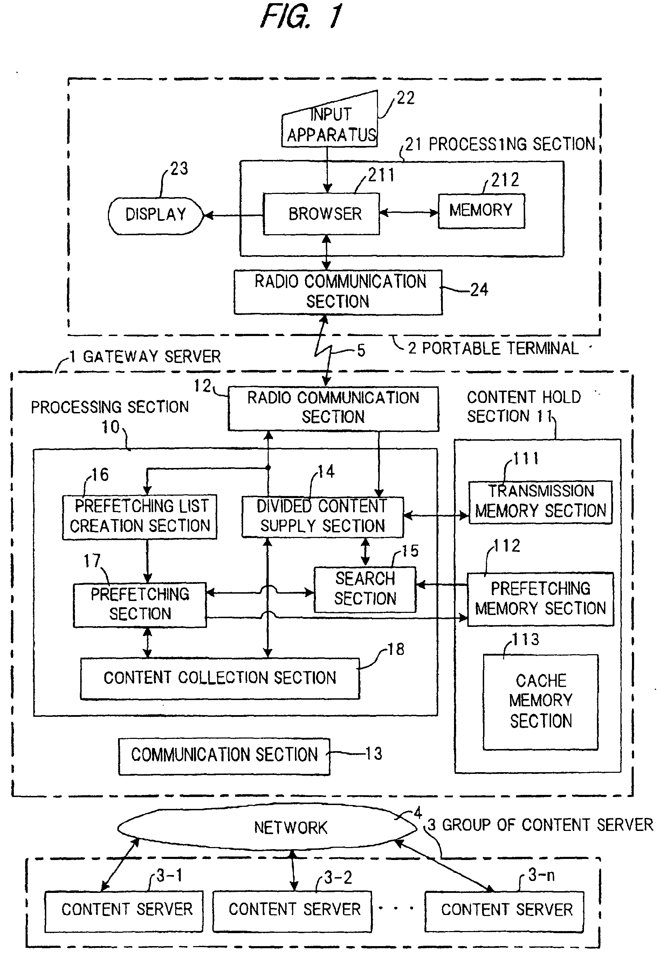

Referring to Fig. 1, a first example of a content supply apparatus illustrative of the present invention includes gateway server I constituting the content supply apparatus, portable terminal 2 receiving the content supply, and a group of content servers 3 including a plurality of content servers 3-1 to 3-n accumulating the contents to be supplied, the gateway server 1 and the group of content servers 3 being connected by wire or radio through a network 4 such as the internet or the like, and the portable terminal 2 and the gateway server 1 being connected through radio link 5.

Each of content servers 3-1 to 3-n accumulates a number of contents. In this example, a respective content is an HTML file. Each content is identified uniquely by the URI allocated to it. Further, link information for referring to the other contents is embedded in a respective content. The link information specifies the URI of the content to be referred to.

The portable terminal 2 has a processing section 21, run by a program, an input apparatus 22 connected to the section 21, a display 23 and a radio communication section 24. The input apparatus 22 includes numeric keys, or a keyboard, while the display 23 is an LCD, or the like. The radio communication section 24 communicates via the radio link 5, with the gateway server 1 and includes a modem, an amplifier or an antenna. The processing section 21 controls the whole of the portable terminal 2, and includes a CPU, and a RAM for memorizing the program, or the like. The processing section 21 has a browser 211 and memory 212 for content memorization, as parts concerning the content supply. The portable terminal 2 may be a terminal dedicated to the content display, or a terminal having other functions, such as a portable telephone function.

The gateway server 1 includes a processing section 10 run by a program, a content hold section 11 connected to the section 10, a radio communication section 12 and a communication section 13. The processing section 10 includes a CPU, a RAM for memorizing the program, or the like, and includes, as functional means provided by them, a divided content supply section 14, a search section 15, a prefetching list creation section 16, a prefetching section 17, and a content collection section 18.

The radio communication section 12 communicates with the portable terminal 2 through the radio link 5 and includes a modem, an amplifier and an antenna. The communication section 13 communicates with an arbitrary content server of the group of content servers 3 through the network 4 and includes a modem, an amplifier and an antenna.

The content hold section 11 accumulates temporarily the contents collected from the group of content servers 3, and is, for example, a magnetic disk device. The content hold section 11 includes a transmission memory section 111, a prefetching memory section 112, and a cache memory section 113. The transmission memory section 111 holds only the contents actually supplied to the portable terminal 2. The prefetching memory section 112 holds only the prefetched content, among the other contents referred to from the content held in the transmission memory section 111, and a cache memory section 113 holds the content that has previously been obtained by the portable terminal 2. In the case of a shortage of space to store new content, this cache memory section 113 secures the required space or area by discarding the contents that have not been referred to for the longest time, by means of an exchange algorithm of LRU format.

The divided content supply section 14 divides the content that the portable terminal demanded be obtained into a unit of an amount of information that can be displayed by the portable terminal, or otherwise processes the content, and supplies the portable terminal with the content by the divided unit. An individual unit obtained by this content division is called the "divided content" in this specification.

The prefetching list creation section 16 inputs the divided content that the divided content supply section 14 has actually supplied to the portable terminal 2, detects link information to the other contents embedded therein, and creates a prefetching list enumerating the URIs of the other contents to be prefetched. The prefetching section 17 prefetches the contents based on the URI described in this prefetching list. The prefetched content is stored in the prefetch memory section 112 of the content hold section 11.

The search section 15 searches for the content having the desired URI in the content hold section 11 and is used by the divided content supply section 14 and the prefetching section 17. The content collection section 18 collects the content having the desired URI from the group of content servers 3 through the communication section 13 and the network 4, and is used by the divided content supply section 14 and the prefetching section 17

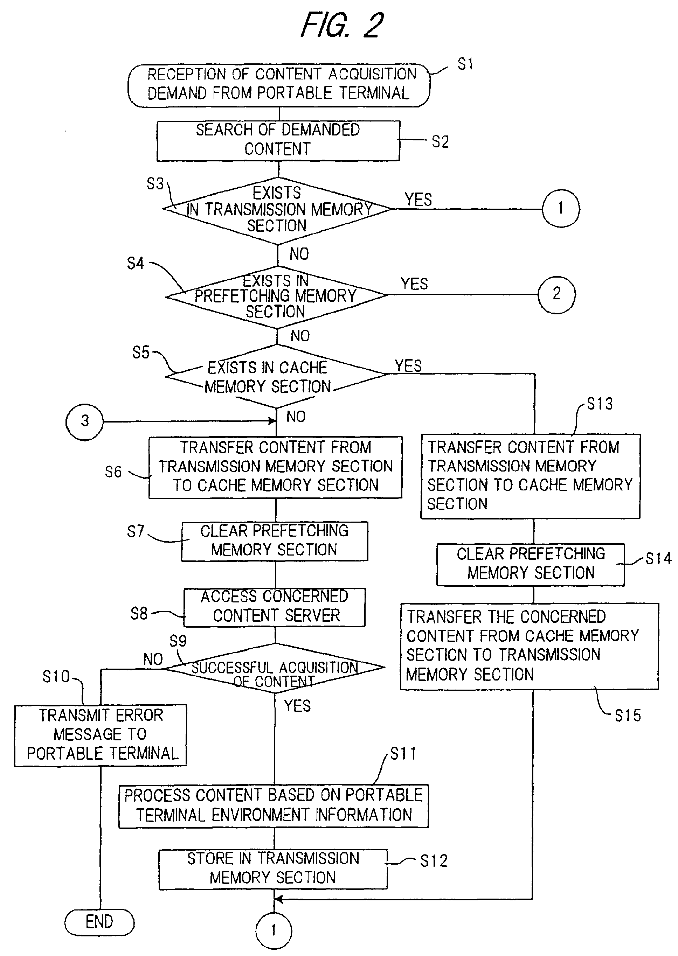

Referring now to Fig. 1 to Fig. 5 and particularly to the flow charts of Figs. 2 to 5. The system operation will be described from the initial state in which the hold section 11 of the gateway server 1 holds no content.

When the browser 211 is started through the operation of the input apparatus 22 by the user of the portable terminal 2, the browser 211 displays the browser screen on the display 23 and waits for an operation by the user. When the user specifies the connection destination URI and specifies execution, the browser 211 transmits a new content acquisition demand, including a terminal ID identifying uniquely the specified URI and the portable terminal 2, to the gateway server 1 through the radio communication section 24 via the radio link 5.

Upon the receipt of a new content acquisition demand from the portable terminal 2 (S1) , the radio communication section 12 of the gateway server 1, transmits the demand to the divided content supply section 14. The divided content supply section 14 judges the new content acquisition demand, and searches to see if the content of that URI is stored in the content hold section 11 using the search section 15 (S2). In the initial state, where the content does not exist, the divided content supply section 14 accesses the content defined uniquely in the URI of the content server concerned and specified by that URI, using the content collection section 18 (S8) . Beforehand, if the content is stored in the transmission memory section 111, it is transferred to the cache memory section 113 (S6) and the prefetching memory 112 is cleared (S7)

If the desired content could not be obtained due to the content server being down or for some other reason (NO in S9), the divided content supply section 14 transmits an error message announcing it to the portable terminal 2 through the radio communication section 12 (S10) and terminates the processing. The browser 211 displays the error message on the display 23 at the portable terminal 2.

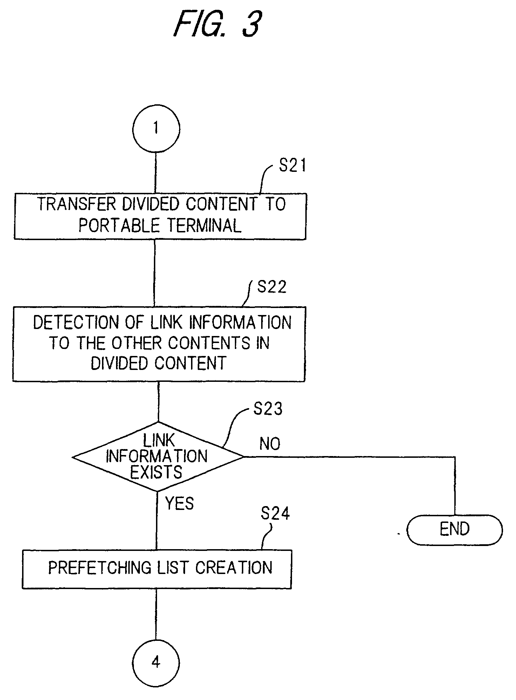

If the desired content is obtained (YES in S9), the divided content supply section 14 searches for a table (not shown) registering the pair of the terminal ID and the terminal environment information (amount of information that can be displayed at one time, the number of colours that can be displayed, or the like) with the terminal ID which is demanding the acquisition of the content, obtains the environment information of the portable terminal 2 demanding the content acquisition, and processes the content based on the same (S11). For example, the number of display colours of that content is reduced by an amount equal or inferior to the number of colours that can be displayed by the portable terminal 2, and the content is divided into units of an amount of information that can be displayed by the portable terminal 2. Then, the respective divided content is stored in the transmission memory section 111 of the content hold section 11 (S12) and the divided content corresponding to the leading head of the content and the terminal ID of the portable terminal 2 demanding the divided content are delivered to the radio communication section 12, and the radio communication section 12 sends the divided content to the portable terminal 2 via the radio link 5 (S21 of Fig. 3).

In the portable terminal 2, a browser 211 memorizes temporarily the divided content received by the radio communication section 24 in a memory 212, and then displays it on the browser screen of the display 23. On the other hand, when the divided content supply section 14 delivers the divided content and the terminal ID to the radio communication section 12, the prefetching list creation section 16 of the gateway server 1 side inputs the same, and detects all link information to the other contents in that divided content (S22). For example, in the case of an HTML file, the description <A href="URI" is detected. If no link information is detected, (NO in S23) , the processing is terminated, and if one or more elements of link information is/are detected, a prefetching list enumerating URIs in a respective link information element is established (S24), and delivered to the prefetching section 17 with the terminal ID.

The prefetching section 17 proceeds as follows for each URI described in the prefetching list. First, it searches to establish if the content of that URI is stored in the content hold section 1 using the search section 15 (S31). In the initial state, as the content does not exist, the prefetching section 17 accesses the content specified by the concerned URI of the content server specified by that URI, using the content collection section 18 (S34) . If the access has failed due to some trouble (content server failure, URL description error, network trouble) (S35), it is retried several times, and if the access still remains unsuccessful (S36), a message reporting the same is stored in the prefetching memory 112 matching or signing off with the URI (S37) if the access is successful, (S35, S36), when the content is pay content or access limited membership content (YES in S38), only the message announcing the pay content of the access limitation is stored in the prefetching memory 112 matching or signing off with the URI (S37). On the other hand, if it is an access free content free of charge (NO in S38), the content is actually obtained (S39). Then, with the environment information corresponding to the terminal ID from a table now shown, the content is processed based on the same or similarly processing by the divided content supply section 14 (S40), and respective divided content is stored in the prefetching memory section 112 (S41) The aforementioned prefetching processing is repeated until there will be no more non-processed link information in the prefetching list (S42).

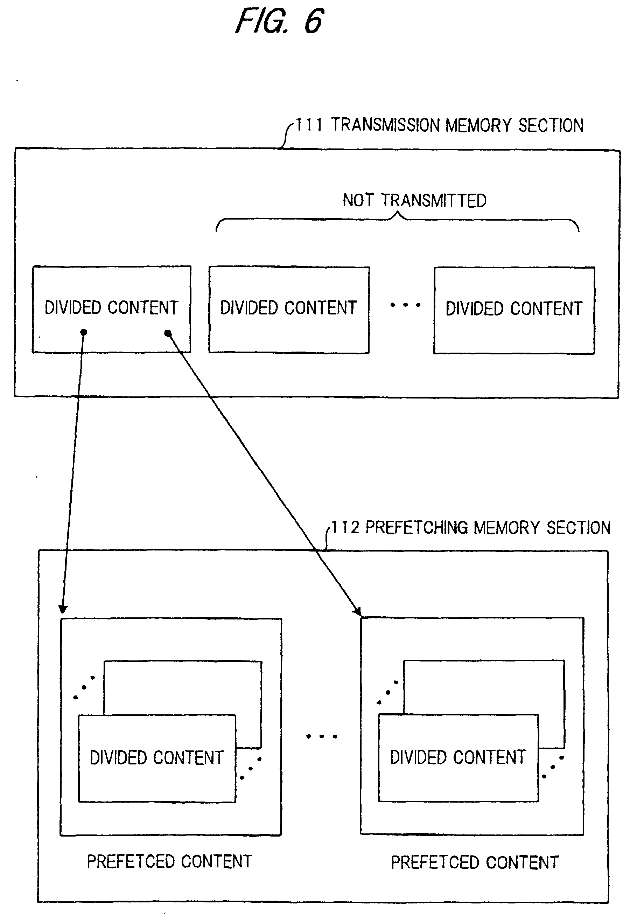

Fig. 6 shows the state of the transmission memory section 111 and the prefetching memory section 112 when one divided content is sent to the portable terminal 2 regarding the content demanded to be obtained by the portable terminal 2, and the prefetching processing by this divided content is terminated. As shown in this drawing, the prefetching memory section 112 prefetches only the content (or possibly message) referred from the transmitted divided content, and contents referred from the divided content and not transmitted yet to the portable terminal 2 are not prefetched at all.

Now, the operation at the time when the user of the portable terminal 2 on which the divided content is displayed demands that the following divided content be displayed will be described.

Suppose that the divided content actually displayed as a result of the user operation of the input apparatus 22 is the page 1, for example, when the user demands that the following divided content be displayed, the browser 211 of the portable terminal 2 transmits the acquisition demand of the second page of the divided content to the gateway server 1 via the radio communication section 24. This divided content acquisition demand also specifies the content URI, and the terminal ID is also specified.

Upon the receipt of a divided content acquisition demand from the portable terminal 2 via the radio communication section 12 (S1), the divided content supply section 14 of the gateway server 1 judges there to be an acquisition demand of a page or pages other than the content being transmitted, and searches to see if the content of that URI is stored in the content hold section 11 using the search section 15 (S2). As all of the divided contents of the content being transmitted and memorized are in the transmission memory section 111, those stored in the transmission section 111 an detected (YES in S3) . The divided content supply section 14 fetches the divided content corresponding to the demanded page from the transmission section 111, delivers the same to the terminal ID of the demanding portable terminal 2 and to the radio communication section 12, and the radio communication section 12 transmits the divided content to the portable terminal 2 via the radio link 5 (S21 of Fig. 3).

At the portable terminal 2, the browser 211 memorizes temporarily the received divided content in a memory 212, and then displays it on the browser screen of the display 23. On the other hand, the prefetching list creation section 16 of the gateway server 1 side inputs the divided content and the terminal ID delivered from the divided content supply section 14 to the radio communication section 12 similarly as before, and detects all link information to the other contents in that divided content (S22), and if one or more elements of the link information exist(s), a prefetching list enumerating URIs in respective link information is established (S24) , and delivered to the prefetching section 17 with the terminal ID. The operation of the prefetching section 17 proceeds with the prefetching in a similar way to that previously described for each URI described in the prefetching list (S31 to S42). At this time, if the content to be prefetched is stored in the cache memory section 113 (YES in S33) it is obtained from the cache memory section 113 and stored in the prefetching memory section 112 (S41). If the content is the same as that stored in the prefetching memory section 112 (YES in S32), prefetching is not required.

Now, the operation will be described at the time at which the user of the portable terminal 2 on which the divided content is displayed demands that the content referred to from this content be obtained.

When the content referred to from the divided content actually displayed is required by the user, the browser 211 of the portable terminal 2 transmits the demand for the acquisition of new content, including the specified URI and the terminal ID of the portable terminal 2, to the gateway server 1 through the radio communication section 24 via the radio link 5.

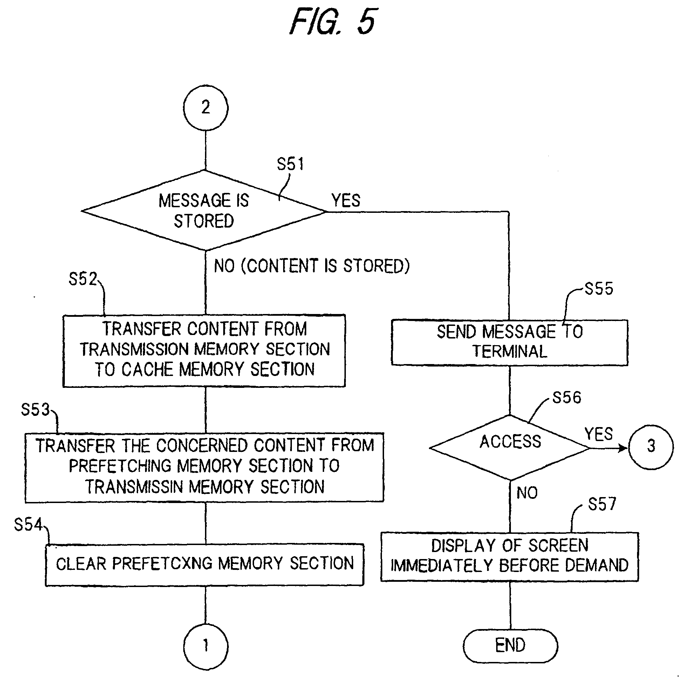

Upon the receipt of a new content acquisition demand from the portable terminal 2 via the radio communication section 12 (S1), the divided content supply section 14 of the gateway server 1 searches to see if the content of that URI is stored in the content hold section 11 using the search section 15 (S2). As shown in Fig. 6. all contents referred to from the divided content actually displayed are prefetched and memorized in the prefetching memory section 112. Therefore, they are judged to exist in the prefetching memory section 112 (YES in S4). Then, the divided content supply section 14 verifies whether the content or only a message is stored in the prefetching memory section 112 (S51 in Fig. 5)

If content is stored, the content in the transmission section 111 is transferred to the cache memory section 113 (S52), the stored content is transferred from the prefetching memory section 112 to the transmission section 111 (S53), the transmission section 111 is cleared, and the operation proceeds to the step S21 and transmits, for example, the leading head divided content to the terminal. Then, the operation proceeds to the prefetching processing.

On the other hand, if a message is stored, the message is transmitted to the portable terminal 2 via the radio communication section 12 (S55). Upon the receipt of this message, the browser 211 of the portable terminal 2 stores the information temporarily in the memory 212, and then displays it on the browser screen. This allows the user to know if the content they desire to obtain is pay content, access limited content, or inaccessible content due to network trouble, or the like. In this case, the user may decide to obtain the content, or demand the access knowing the situation. In the user input a message may be placed to give up the access by the operation of the input apparatus 22, and the browser 211 then transmits the message to the gateway server 1 through the radio communication section 24, the divided content supply section 14 which identifies the access abandon decision (NO in S56) and transmits again the divided content that has been sent immediately before sending the message to the portable terminal 2, displaying again the last divided content data by the display 23 of the portable terminal (S57).

On the other hand, if the user decides to carry out the access by means of the operation of the input apparatus 22, the browser 211 transmits the decision to the gateway server 1, the divided content supply section 14 identifies the access execution abandon instruction (YES in S56) and shifts the processing to the step S6 of Fig. 2 In other words, the content in the transmission section 111 is transferred to the cache memory section 113 (S6), the prefetching memory section 112 is cleared (S7) , and the acquisition of the demanded content is tried again (S8) . If the content is obtained successfully, the processing of a shift to the step 311 is executed and content processing, transmission of divided content to the terminal, and prefetching of the transmitted divided content are carried out. If unsuccessful, an error message indicating the lack of success is transmitted to the portable terminal 2 to terminate the processing. (S10).

The operation, at the time when the user of the portable terminal 2 on which the divided content is displayed demands that a content be obtained other than the content referred to from this divided content, is substantially similar, however, as the demanded content is absent in the prefetching memory section 112, it is obtained from the cache memory section 113, if it exists therein, and if it does not exist, it is obtained from the content server concerned. If the content of the cache memory section 113 is to be used, the content in the transmission section 111 is transferred to the cache memory section 113 (S13), the prefetching memory section 112 is cleared (S14) , and the content concerned is transferred from the cache memory section 113 to the transmission memory section 111 (S15).

The above description of a first arrangement has been focused on a single portable terminal 2 and its composition and operation were described, however, a plurality of portable terminals 2 may be connected to the gateway server 1. In this case, each portable terminal will be provided with a transmission memory section 111 and prefetching memory section 112 of the content hold section 11. The cache memory section 113 may be common to all of the portable terminals 2, if the same processing is to be applied to all of the portable terminals 2, and if this is not the case, each portable terminal will have their own memory section 113. An embodiment in which the cache memory section 113 is common to all of the portable terminals 2 when the same processing is not applied to all of the portable terminals 2 will now be described.

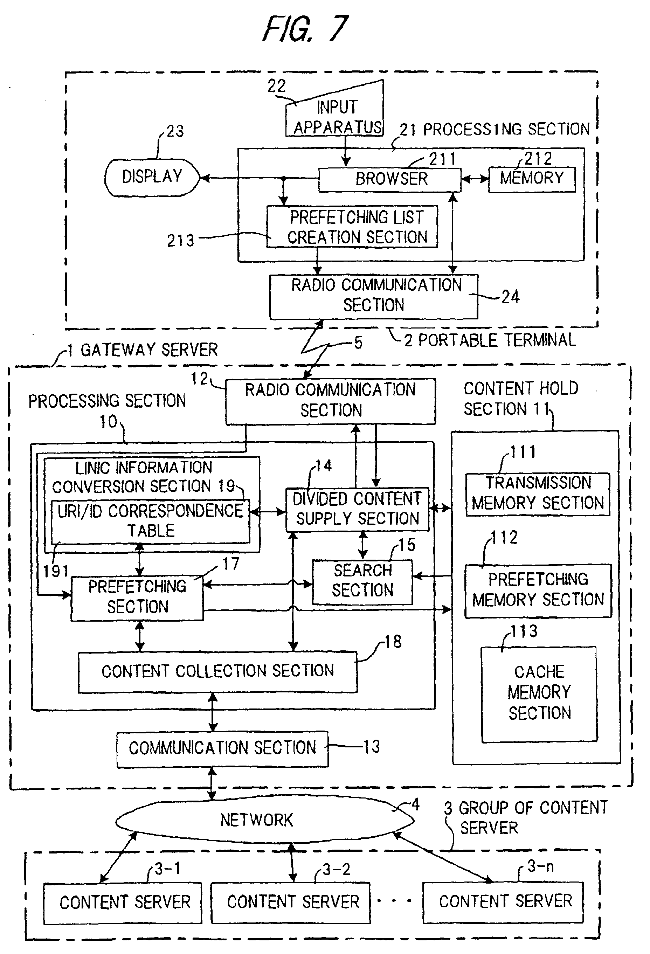

Referring to Fig. 7, there will be described another content supply apparatus illustrative of the present invention which differs from the previously described arrangement in that at the portable terminal 2 side there is a prefetching list creation section 213 for creating the prefetching list at the portable terminal 2 side, and in that the gateway server 1 side is provided with a link information format conversion section 19 for sending the link information in a divided content to be transmitted from the gateway server 1 to the portable terminal 2 in ID number format, and not in URI format.

In the ID number format, ID numbers corresponding one by one to the URI is adopted, for describing the link information with this ID number in place of an URI. Sometimes, an URI may have a very long character number, and the amount of its information is not negligible, as a result of which the communication time and the communication cost are increased. Therefore, in this second arrangement, the amount of information sent during a communication is reduced by replacing the URI with an ID number having a smaller amount of information, using ID numbers of the number of digits to the extent that a unique number can be adopted for each respective content. For instance, an ID number of 8 bits will be enough if the maximum number of contents referred to from one divided content is about one thousand.

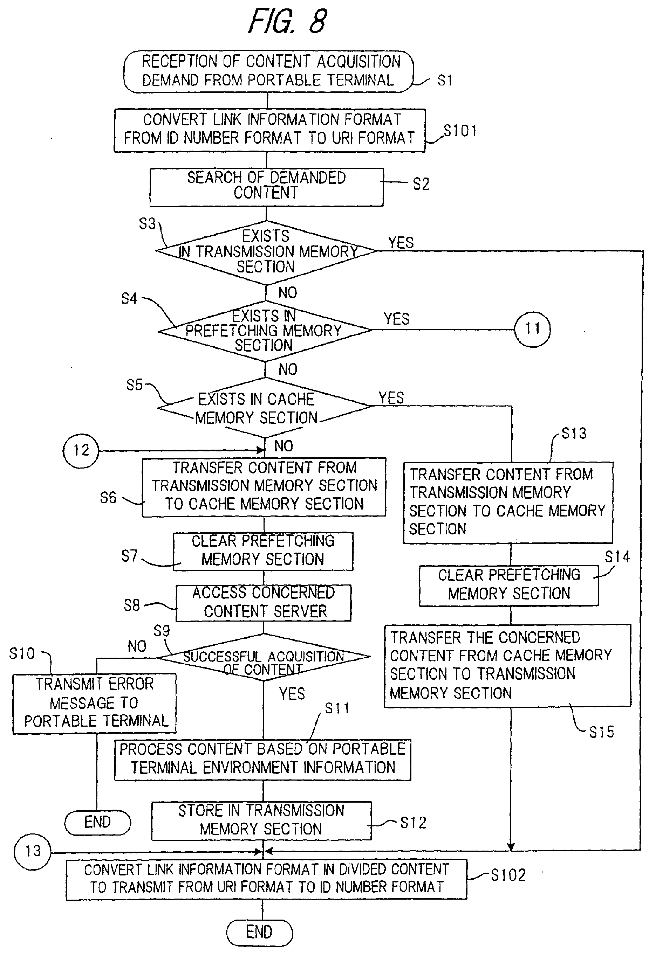

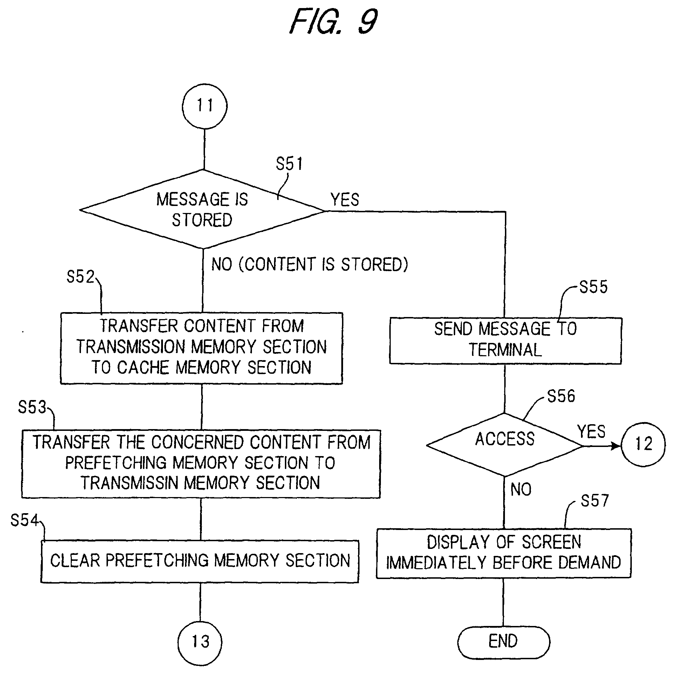

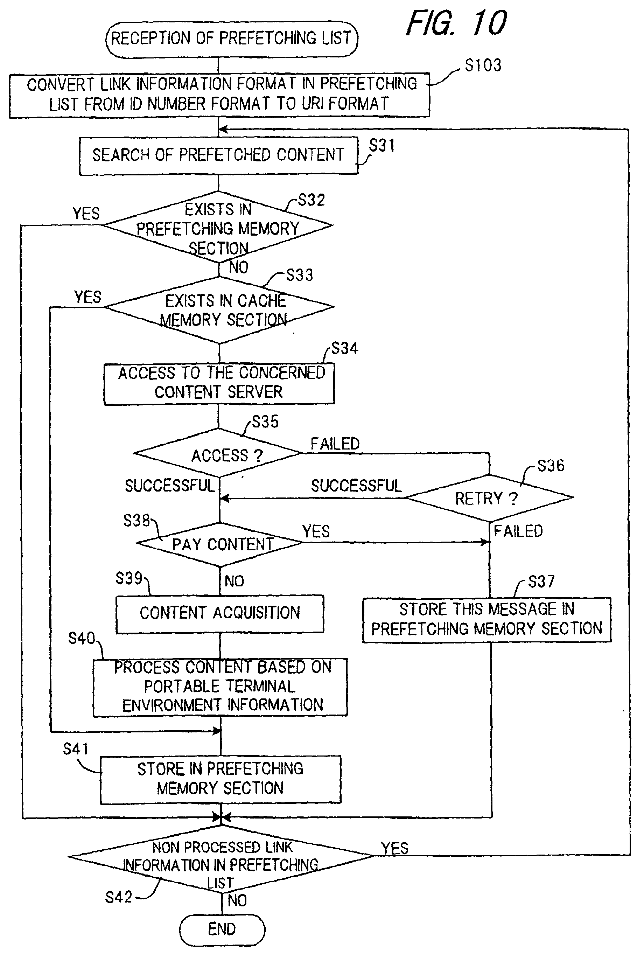

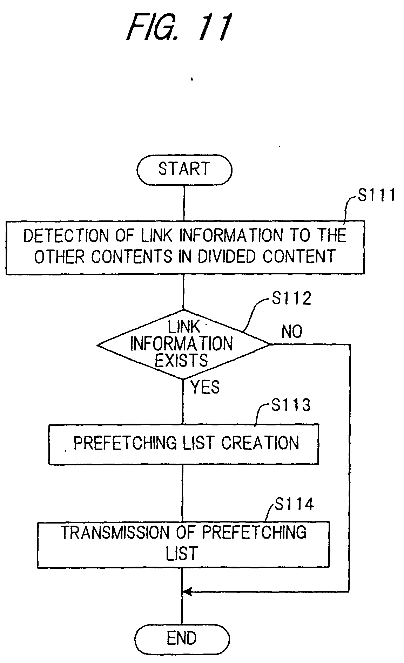

Fig. 8 to Fig. 10 are flow charts for use in describing the processing of the gateway server 1, Fig. 11 is a flow chart for use in describing an example of the processing of the prefetching list creation section 213 of the portable terminal 2, and the operation of this second arrangement will be described with reference to Fig. 7 to Fig. 11 focussing on the differences from the first described arrangement.

When the portable terminal 2 user designates the browser 211 to carry out an operation by specifying the communication destination URI, the browser 211 transmits a new content acquisition demand, including the specified URI and the terminal ID of the portable terminal 2, to the gateway server 1 through the radio communication section 24 via the radio link 5. Upon the receipt of a new content acquisition demand through the radio communication section 12 (51), the divided content supply section 14 of the gateway server 1, converts the link information in the content acquisition demand into a URI format (S101) using the link information conversion section 19, if the format is the ID number format; but in this case, the conversion is not executed because it is in a URI format. Thereafter, the content which it is demanded be obtained is stored in the transmission memory section 111 as a plurality of divided contents through processing similar to that described with reference to the first arrangement (S3 to S15, S51 to S54).

Then, the divided content supply section 14 delivers one divided content to be transmitted to the link information conversion section 19, makes all link information in a URI format in the divided content converted into ID number format link information, and transmits the converted divided content to the portable terminal 2 via the radio communication section 12 (S102). In the link information conversion, section 19 clears first the inner URI/ID correspondence table 191, adopts one unique ID number each time that one link information is detected from the divided content, replaces the detected URI format link information with this adopted ID number, and registers the set of this URI and this ID number in the inner URI/ID correspondence table 191.

In the portable terminal 2, the browser 211 memorizes once the divided content received by the radio communication section 24 in the memory 212, and then displays it on the browser screen of the display 23. The prefetching list creation section 213 inputs the divided content displayed on the browser screen by the browser 211, and detects all link information in URI format to the other contents in the divided content (S111). If no link information is detected (NO in S112) , the processing is terminated, and if one or more link information(s) is detected, a prefetching list enumerating ID numbers in respective link information is established (S113), and transmitted to the gateway server through the radio communication section 24 (S114)

When the radio communication section 12 of the gateway server 1 receives the prefetching list, it delivers it to the prefetching section 17. The prefetching section 17 delivers the received prefetching list to the link information conversion section 19 in order to convert all ID numbers in the prefetching list converted into URI (S103) . At this time, the link information, conversion section 19 finds the concerned URI by searching in the inner URI/ID correspondence table 191 for each ID number in the prefetching list, and replaces the corresponding ID number in the prefetching list with this URI. Thus, the prefetching section 17 prefetches by the same procedure as in the first described arrangement, based on the conversion of the prefetching list into URI format (S31 to S42).

When the user operation demands that there be obtained a content referred to from the divided content being displayed, the browser 211 of the portable terminal 2 transmits a new content acquisition demand, including the specified link information (in this case, link information in ID number format), to the gateway server through the radio communication section 24 via the radio link 5. The divided content supply section 14 of the gateway server delivers the ID number of the new content acquisition demand from the portable terminal 2 to the link information conversion section 19, and converts it into URI (S101). At this time the link information conversion section 19 searches in the inner URI/ID correspondence table 191 with the delivered IR, to find the corresponding URI and returns it. The divided content supply section 14 performs the new content acquisition, based on the converted URI according to the same procedure as mentioned above.

The description of the second arrangement given above has been focused on a single portable terminal 2, and its structure and method of operation have been described. However a plurality of portable terminals 2 may be connected to the gateway server 1. In this case, each portable terminal will be provided with a transmission memory section 111 and a prefetching memory section 112 of the content hold section 11 and an inner URI/ID correspondence table 191. The cache memory section 113 may be common to all portable terminals 2 if the same processing is to be applied to all portable terminals 2, and if this is not the case, each portable terminal shall have its own.

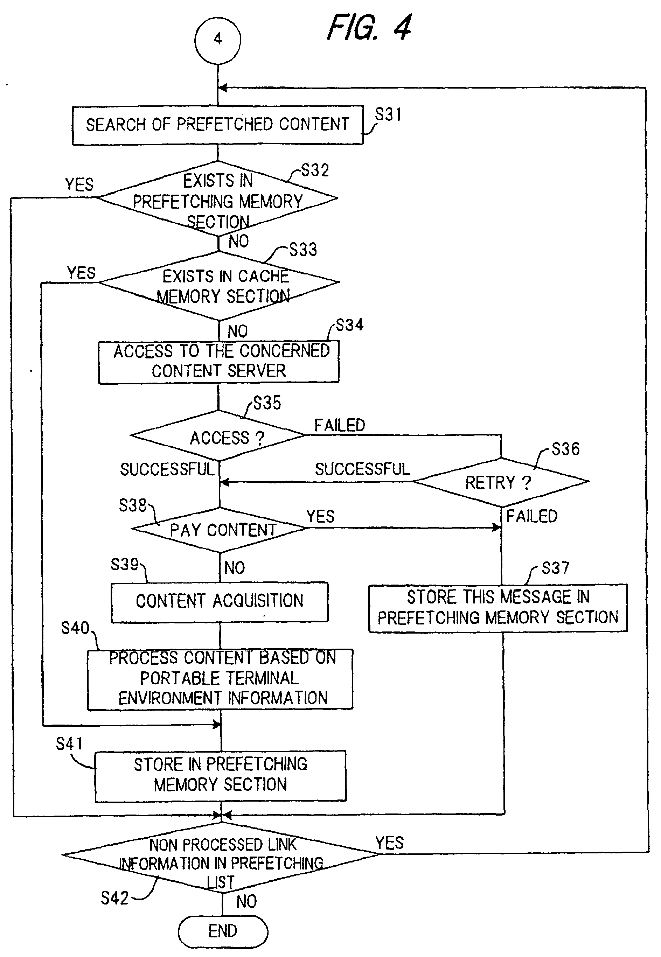

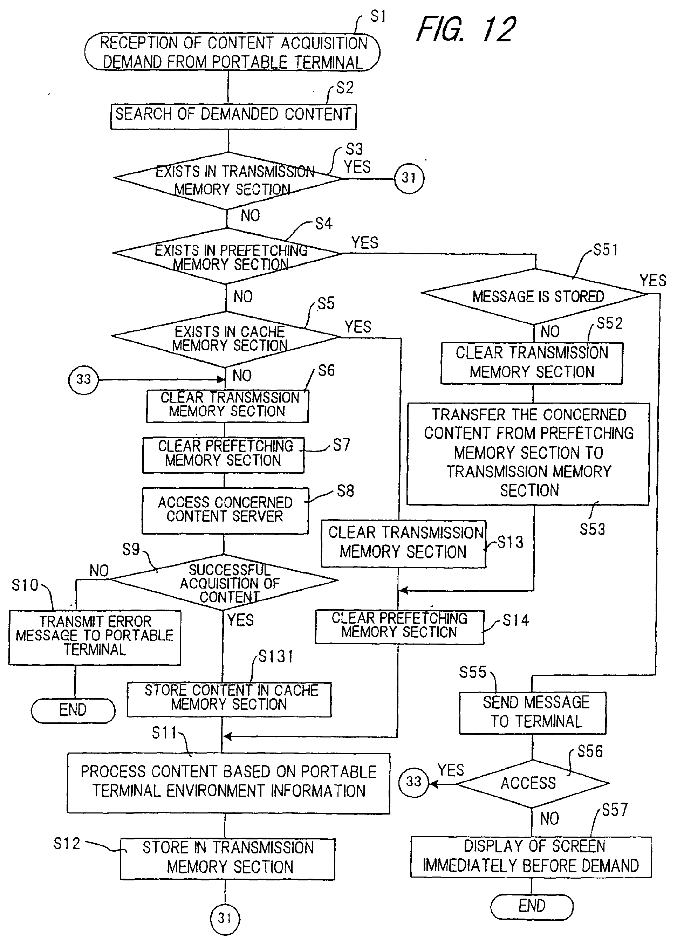

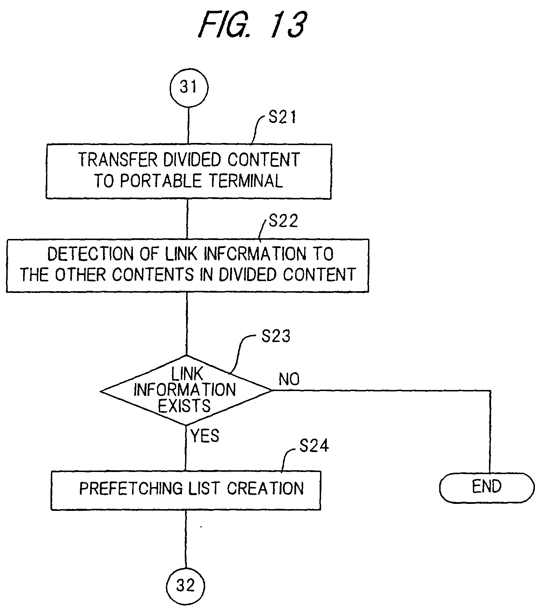

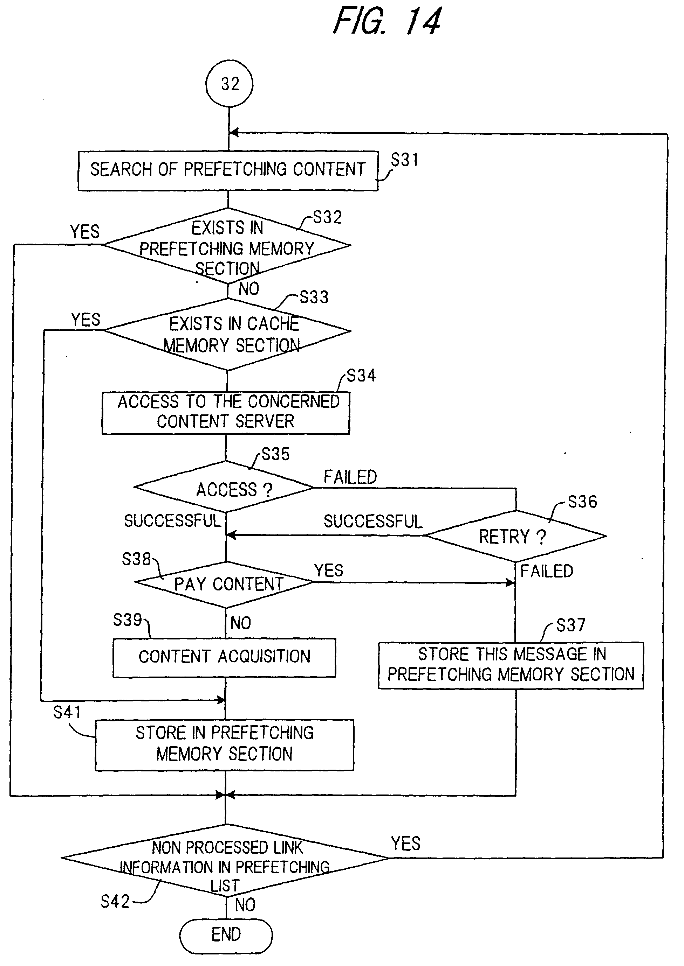

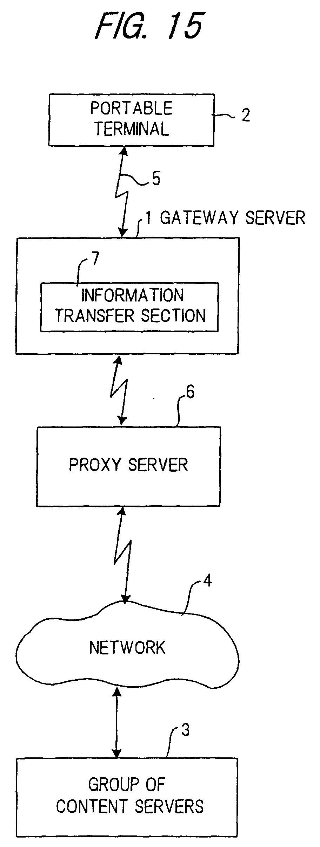

Other arrangements illustrative of the invention are possible.
(1) In the arrangements described above, the division or other processing of the prefetched content have been carried out beforehand, however, they may be performed immediately before sending the first divided content to the portable terminal 2. At this time, the cache memory section 113 can be made common to all portable terminals even when the processing contents are not identical to all portable terminals, by caching the content before the processing in the cache memory section 113. A processing example of the gateway server 1, wherein the aforementioned modification is applied to the first described arrangement, is shown in Fig. 12 to Fig. 14 (applicable similarly to the second arrangement). As shown in Fig. 14, the step S40 of Fig. 4 is omitted, and the content before the processing is prefetched in the prefetching memory section 112. As a result, as shown in Fig. 12, the content is processed before the transmission (S11), if the content whose acquisition is demanded by the portable terminal 2 exists in the cache memory section 113 (YES in S5) and exists in the prefetching memory section 112 (YES IN S4, NO in S5), and preceding that transmission, the processing of the content (S11 ) is carried out. Besides, a supplementary step S131 for storing the content before processing into the cache memory section 113 is added, the processing of steps S6, S14 is replaced by the clear processing of the transmission memory section 111, and the processing of the step S53 is modified to include the processing of the content transferred from the prefetching memory section 112 to the cache memory section 113 and the transmission memory section 111.
(2) The arrangement to convert the link information in URI format in the content to ID number format can be applied, not only to the arrangement wherein the prefetching list is established at the portable terminal 2 side, but to the arrangement wherein the prefetching list is established by the gateway server 1.
(3) In a respective arrangement mentioned above, all of the content referred to from the divided content are displayed on the portable terminal 2, it is also possible to select or give priority order to the content to be prefetched. For instance, in general, the contents in the same content sever are often those following the content actually displayed, or related contents, therefore, the prefetching section 17 may prefetch only URIs in the same content server among URIs in the prefetching list, or it may prefetch giving priority to the content of the other content servers, as a result of the gateway server 1 recognizing the content server storing the content actually being displayed by the portable terminal 2. In this case, the first described arrangement may enumerate only URIs in the same content server at the stage of prefetching list creation by the prefetching list creation section 16, or give an order of priority. Otherwise, the user operation history, or the like may be held by the portable terminal 2 on the gateway server 1 side, and the priority decision or the selection can be carried out based on this information required to establish the prefetching list.
(4) As shown in Fig. 15, when a gateway server 1 and a proxy sever 6, that can communicate with the gateway server I, and a group of content servers 3 are interposed between the portable terminal 2 and the group of content servers 3, the composition of the gateway server 1 described for the respective arrangement may be installed in the proxy server 6 in place of gateway server 1. In this case, the gateway server 1, by using an information transfer section, controls the transfer of the content demanded by the acquisition, or the like, and transmitted from the portable terminal 2 to the proxy server 6, and the transfer of response data from the proxy server 6 to the portable terminal 2.
(5) The content accumulated in the content server is not limited to an HTML file, but it may be an image file, an animation file, a sound file, or any other content.
(6) In the aforementioned arrangement, it has been supposed that the prefetching has been terminated at the content supply apparatus side, such as the gateway server, when the portable terminal 2 demands the acquisition of the other contents referred to from the content actually displayed. However. in some cases, the prefetching may not have been terminated. In this case, the prefetching may be suspended, or terminated, to give priority to the processing of the demand from the portable terminal 2.
(7) In a particular arrangement, if the content to be prefetched is already stored in the content hold section 11, it has been used for prefetching processing, however, it may be reloaded from the group of contents.

As mentioned above, the arrangements described in illustration of the present invention allow a reduction in the time between the content acquisition operation by the portable terminal user and the actual transmission of the content to the portable terminal and the display thereof, and useless content prefetching to be avoided.

Also, in the arrangement for converting the URI format link information into ID number format, the amount of the transfer information between the portable terminal and the content supply apparatus is much reduced, and the communication time is shortened, so that the communication charge can be saved.

Further, in the arrangement wherein, if the content to be prefetched is either pay content, access restricted content, or content that could not be prefetched due to network trouble or for some other reason, this message is stored in place of the prefetched content, and the portable terminal user demands such content to be obtained, the message is transmitted to the portable terminal, the portable terminal user being able to know beforehand that the content in trouble, i.e. the pay content, or the access limited content, and to dispense with a useless access and a useless payment of a communication fee.

## Claims

1. A content supply apparatus, interposed between a portable terminal and a content server, for obtaining information or data content demanded by the portable terminal be sent to the portable terminal, including a content hold means for holding the content obtained from the content server, a divided content supply means for obtaining the content demanded by the portable terminal from the content hold means, if the content exists in the hold means, and from the content server if the content does not exist in the hold means, and transmitting to the portable terminal by a divided content unit, an amount of information that can be displayed by the portable terminal, and a prefetcher means for prefetching the other contents referred from the divided content supply means, by the transmitted divided content unit, from the content server, and storing the other contents in the content hold means.

2. A content supply apparatus as claimed in claim 1, including a link information format conversion section for the mutual conversion of URI format link information and ID number format link information wherein, the divided content supply means transmits link information in the divided content to be transmitted to the portable terminal and, by substituting entirely with ID number format link information format conversion section, obtains the corresponding URI by the link information format conversion section, when the portable terminal demands the content to be obtained in the ID number format.

3. A content supply apparatus as claimed claim 1, including a prefetch list creation section for detecting link information to the other contents contained in the divide content transmitted by the divided content supply means to the portable terminal for establishing a prefetch list and delivering to the prefetcher means.

4. A content supply apparatus as claimed in claim 1, wherein the prefetcher means prefetches according to a prefetch list transmitted from the portable terminal.

5. A content supply apparatus as claimed in claim 1, wherein, if the content to be prefetched is either the content under pay content access restriction, or the content that could not be prefetched due to network trouble, or for some other reason, the prefetcher means stores that message in the content hold means matching or signing off against the content URI concerned, and the content division means, upon the receipt of the message during the search of the content which it is demanded by the portable terminal is to be obtained from the content hold means, transmits the message to the portable terminal.

6. A content supply apparatus as claimed in any one of the preceding claims, wherein the content hold means includes a transmission memory section for holding only the contents actually supplied to the portable terminal, a prefetch memory section for holding only the prefetched content among the other contents referred from the content held in the transmission memory section, and a cache memory section holding the content that the portable terminal had previously obtained.

7. A machine readable recording media upon which there is recorded a program for the functioning of a computer constituting a content supply apparatus, interposed between a portable terminal and a content server, for obtaining content demanded by the portable terminal to be obtained and sent to the portable terminal, as a content hold means for holding the content obtained from the content server, a divided content supply means for obtaining the content demanded by the portable terminal from the content hold means, if the same exists in the content hold means, and from the content server if the same does not exist in the content hold means, and transmitting it to the portable terminal by means of a divided content unit for every amount of information that can be displayed by the portable terminal, and a prefetcher means for prefetching the other contents referred from the divided content, by transmitting the divided content unit, from the content server, and storing it in the content hold means.
